# EUROPEAN PATENT APPLICATION

(11) **EP 4 635 694 A1**
(43) Date of publication of application: **22.10.2025**
(21) Application number: 24170492.3
(22) Date of filing: 16.04.2024
(51) Int. Cl.: B27C 5/10, B23Q 11/00

(54) **DUST CAP ACCESSORY FOR A POWER TOOL**

(71) Applicant: Black & Decker, Inc., New Britain, CT 06053 (US)
(72) Inventor: LAUER, Arthur, 60327 Frankfurt am Main (DE); ARICH, Mr. Klaus-Dieter, 65510 Hünstetten-Beuerbach (DE); RAJENDRAN, Ashwin, 65510 Idstein (DE); RAAB, Timo, 55127 Mainz (DE)
(74) Representative: SBD IPAdmin

(57) **Abstract**

A dust cap accessory for a power tool having a base portion with a base aperture is disclosed. The dust cap accessory comprises a dust cap body configured to partially cover the base aperture, a base portion mounting mechanism for removably mounting the dust cap accessory to the base portion, and a dust cap centre hole configured to receive a cutting tool when the cutting tool is plunged into a workpiece. The dust cap accessory is configured to limit debris from the workpiece travelling through the base aperture.

## Description

### Field

The technology relates to the field of power tools, specifically to dust management and debris control accessories for tools such as plunge routers and other cutting tools that generate debris during operation. This field focuses on improving the efficiency of dust extraction and maintaining a clean work environment while using power tools.

### Background

Power tools, such as routers, are commonly used for cutting, shaping, and trimming various materials, including wood, plastic, and metal. During the cutting process, a significant amount of dust and debris is generated, which can create a disorganised and untidy work environment. This accumulation of dust and debris may require frequent pauses to clean the work area, slowing down the overall work process. Furthermore, chips from the workpiece can cover the cutting tool, making it difficult to see and operate accurately.

One of the technical causes of these problems is insufficient air flow. The plunge router may not have sufficient air flow to blow away dust and debris from the cutting area. This can lead to the accumulation of dust and debris on the workpiece and in the work area, causing a messy work environment and obscured cutting tool.

Various attempts have been made to address these issues in the prior art. For example, US 7,290,967 discloses a fixed router with a dust extractor device and an extractor hood for directing chips from the workpiece during operation. The extractor hood projects downwardly from the base of the router. However, this solution is not applicable to a plunge router and therefore is not suitable for accommodating an axially moving cutting tool during a plunge operation.

### Summary

According to a first aspect of the disclosure, a dust cap accessory for a power tool having a base portion with a base aperture is provided. The dust cap accessory comprises a dust cap body configured to partially cover the base aperture, a base portion mounting mechanism for removably mounting the dust cap accessory to the base portion, and a dust cap centre hole configured to receive a cutting tool when the cutting tool is plunged into a workpiece. The dust cap accessory is configured to limit debris from the workpiece travelling through the base aperture. This helps reduce the spread of the dust and debris over the workpiece and tool and improves the overall tool performance.

Optionally in some examples, the base portion mounting mechanism comprises a dust cap release clip configured for snap fit engagement with the base portion. This provides the advantage of easy and secure attachment of the dust cap accessory to the power tool.

Optionally in some examples, the dust cap release clip comprises a projecting lip configured to engage a shoulder portion on a first base side of the base portion.

Optionally in some examples, the dust cap accessory further comprises a release lever configured to release the projecting lip from the shoulder portion when depressed, allowing the dust cap accessory to be released from the base portion. This provides the advantage of easy removal of the dust cap accessory when necessary.

Optionally in some examples, the dust cap release clip comprises a living hinge and is integral with the dust cap body.

Optionally in some examples, the dust cap accessory further comprises a dust cap projecting arm configured to pivotally mount the dust cap accessory to the base portion.

Optionally in some examples, the dust cap projecting arm comprises a pivot recess configured to engage and pivot about a base aperture lip on the base portion.

Optionally in some examples, the dust cap projecting arm comprises a projecting arm clip configured to engage a cap engagement recess on the base portion.

Optionally in some examples, the dust cap centre hole comprises a centre hole lip configured to project downwards towards the base portion. This provides the advantage of preventing chips from exiting the dust cap centre hole, further reducing debris in the work area.

Optionally in some examples, the dust cap accessory is configured for tool-free mounting and adjustment. This provides the advantage of easy installation and adjustment without the need for additional tools.

Optionally in some examples, the base portion comprises an extraction chamber in fluid communication with a vacuum source, and the dust cap accessory is configured to partly form the extraction chamber when the dust cap accessory is mounted to the base portion. This provides the advantage of improved airflow and more efficient removal of chips, dirt, and debris by the vacuum.

According to a second aspect of the disclosure, a power tool is provided, comprising a housing, a base portion having a base aperture, a cutting tool, and a dust cap accessory as described above. The dust cap accessory is removably mounted to the base portion and configured to limit debris from a workpiece travelling through the base aperture when the cutting tool is plunged into the workpiece. This aspect provides the advantage of a power tool with an integrated dust cap accessory, reducing debris and improving overall tool performance.

Optionally in some examples, the base portion comprises a first guide post having a first guide post conduit in fluid communication with a vacuum source via a dust extraction conduit. This provides the advantage of an integrated dust extraction system within the power tool.

Optionally in some examples, the extraction chamber is in fluid communication with the first guide post conduit. This provides the advantage of improved airflow and more efficient removal of debris from the work area.

Optionally in some examples, the power tool is a plunge router.

### Brief Description of the Drawings

Examples are described in more detail below with reference to the appended drawings.
Figure 1 is a front view of a power tool according to an example;
Figure 2 is a front cross-sectional view of a power tool according to an example;
Figure 3 is a plan view of a power tool according to an example;
Figure 4 is a side view of a power tool according to an example;
Figure 5 is a perspective view of the power tool with the dust cap accessory, showing the dust cap in greater detail according to an example;
Figure 6 is a partial close-up cross-sectional view of the power tool with the dust cap accessory, illustrating the engagement between the dust cap and the base portion according to an example;
Figure 7a is a close-up perspective view of the power tool with the dust cap accessory in the locked position according to an example;
Figure 7b is a close-up perspective view of the power tool with the dust cap accessory in the release position according to an example.

### Detailed Description

The detailed description set forth below provides information and examples of the disclosed technology with sufficient detail to enable those skilled in the art to practise the disclosure.

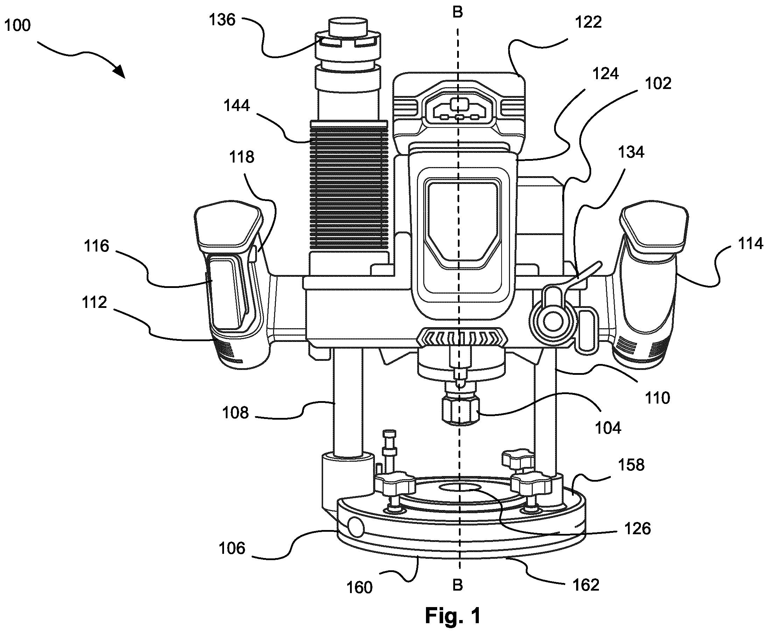

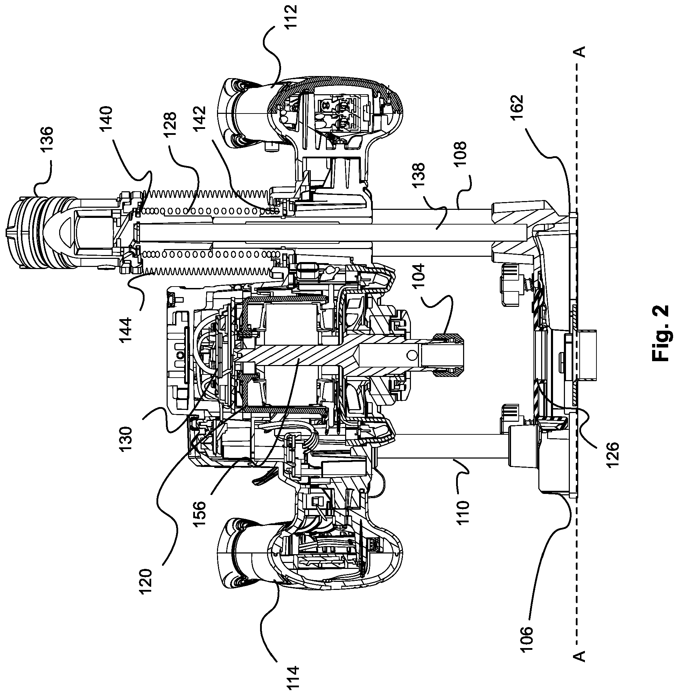

Figure 1 shows a front view of a power tool 100 according to an example. Figures 2, 3 and 4 also respectively show a front cross-sectional view, a plan view, and a side view of the same power tool 100. The power tool 100 as shown in Figure 1 is a router 100. Whilst the power tool 100 can be a router 100 e.g., a plunge router, in other examples any other type of power tool 100 can be used such as a plunge saw, a drill, a multitool, or an oscillating tool mounted on a plunge base portion 106. Hereinafter, the term power tool 100 will be used.

The power tool 100 comprises a housing 102. The housing 102 comprises a clam shell type construction having two halves which are fastened together. The halves of the housing 102 are fastened together with screws but in alternative examples any suitable means for fastening the housing 102 together may be used such as glue, clips, bolts and so on. For the purposes of clarity, the fastenings in the housing 102 are not shown. The housing 102 extends along a longitudinal axis B-B. The longitudinal axis B-B as shown in Figure 1 is also the rotational axis B-B of the power tool 100.

A motor 120 (best shown in Figure 2) is mounted in the housing 102 for driving a tool holder, e.g., a collet 104. The motor 120 is optionally mounted within a motor housing (not shown). The motor housing may be mounted to the housing 102. The motor 120 may be any suitable type of electric motor, such as a brushed or brushless DC motor, an AC motor, a stepper motor, or other types of motors known in the art. Optionally, the motor housing is mounted to the housing 102 via dampeners e.g. rubber mounts (not shown) to reduce the vibration transmitted from the motor 120 to the housing 102 and, in turn, to the user.

The motor 120 is operatively connected to the collet 104 through a drive shaft 156, which transmits the rotational movement of the motor 120 directly to the tool holder e.g., the collet 104. The drive shaft 156 may comprise one or more bearings to decrease friction and ensure smooth rotation of the collet 104.

The motor 120 may comprise various cooling components, such as fans or cooling fins, to dissipate heat generated during operation. These cooling components may be encased within the motor housing or the housing 102 of the power tool 100 and may be integrated into the design of the motor 120 itself.

A cutting tool bit (not shown) can be mounted in the collet 104 for engaging a workpiece (not shown). Typically, the cutting tool is a cutting tool bit for a power tool 100. In some examples the cutting tool bit is a router bit such as an upcut spiral router bit, a downcut spiral router bit, a straight router bit, a cove router bit, a chamfer router bit, a rabbeting router bit, a roundover router bit, a beading router bit, an ogee router bit or a panel raising router bit. Any other suitable router cutting tool bit can be mounted in the collet 104.

The collet 104 may be a cylindrical component that contains an inner bore to accommodate and grip the shank of the cutting tool bit. The collet 104 is known and will not be discussed in any further detail.

As shown in Figure 1, the power tool 100 comprises a base portion 106 for engaging the workpiece. The base portion 106 comprises a base aperture 126 through which the cutting tool bit can project e.g., when the user plunges the housing 102 towards the base portion 106 and then the cutting tool bit projects through the base aperture 126. The base portion 106 is mounted to the housing 102 via first and second guide posts 108, 110. The first and second guide posts 108, 110 are slidably mounted to the housing 102 for adjusting the relative distance of the base portion 106 from the collet 104. In some examples, the first and second guide posts 108, 110 are removable. This means that the power tool 100 can be used without the base portion 106 engaging the workpiece.

The housing 102 comprises a first handle 112 and a second handle 114 for the user to grip during operation. The first handle 112 and the second handle 114 have a different arrangement. In some examples, a main trigger switch 116 for operating the power tool 100 is mounted within the first handle 112. In some examples, the first handle 112 also comprises a lock button 118 for selectively locking the main trigger switch 116 into an "ON" status. This means that the user does not have to constantly keep pressure maintained on the main trigger switch 116 during operation of the power tool 100. In some examples, the main trigger switch 116 can be replaced with a momentary switch (not shown).

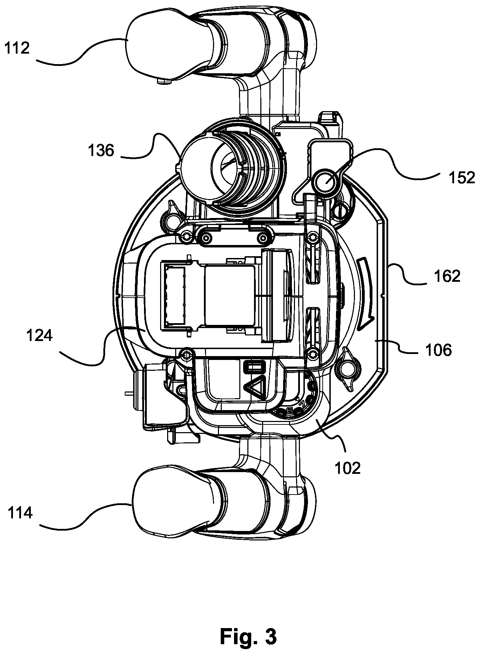

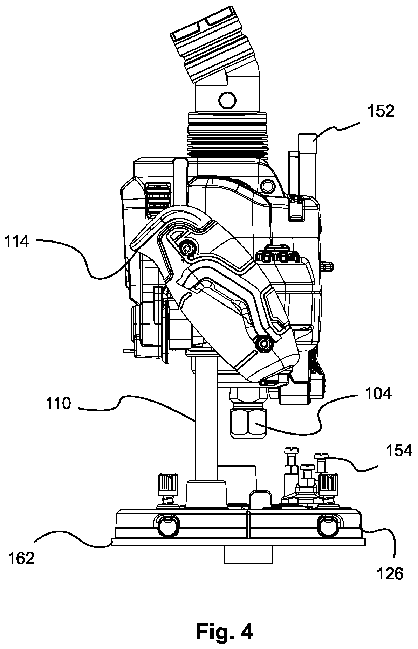

The user can hold both the first handle 112 and the second handle 114 to grip the power tool 100 during operation thereof. The first handle 112 and the second handle 114 optionally comprise a clam shell arrangement. As shown in Figures 3 and 4, the first handle 112 and the second handle 114 comprise a "T-shaped" profile. This means that the first handle 112 and the second handle 114 have an ergonomic profile and are comfortable when the user wraps their fingers and thumbs around the first and second handles 112, 114.

Indeed, the first handle 112 and the second handle 114 are separate handle elements that are mountable to the housing 102. Accordingly, the separate parts of the first handle 112 on the second handle 114 can be assembled before the first and second handles 112, 114 are mounted on the housing 102.

In some examples, the first and second handles 112, 114 are mounted to the housing 102 with one or more screw fastenings. In some other examples, any other type of fastening arrangement can be used, e.g., adhesive, clips, or clamps or a friction fit etc.

The motor 120 is electrically connected to an electric power source 122. In some examples, the electric power source 122 is a mains electrical supply. In some other examples, the electrical power source 122 is a battery 122. The battery 122 can be removably mountable to the housing 102 or integral to the housing 102. In some examples, the power tool 100 can be powered either from both a battery 122 and / or a mains electrical supply. The motor 120 is connected to a controller 130 (best shown in Figure 2) mounted on a PCB in the housing 102. The controller 130 is configured to issue control instructions to the motor 120 in dependence of the user actuating the main trigger switch 116.

The battery 122 as shown in Figure 1 is securely mounted to a top portion 124 of the housing 102. The battery 122 is configured to power the motor 120 and other electronic components. The battery 122 may comprise lithium-ion cells, nickel-metal hydride cells, or any other type of rechargeable or non-rechargeable power source.

The power tool 100 as shown in Figure 1 is optionally a plunge router 100. However, in some examples, the power tool 100 is not a plunge router 100. Accordingly, the power tool 100 can be selectively operated in different modes. In a first mode, the power tool 100 is in a locked position. In the locked position, the first and second guide posts 108, 110 are fixed with respect to the housing 102. This means that the housing 102 and the collet 104 are fixed with respect to the base portion 106. Accordingly, the cutting tool (not shown) can be maintained at a set height above the workpiece. This means that the user of the power tool 100 can select how far the cutting tool projects through the aperture in the base portion 106.

In a second mode, the power tool 100 is in an unlocked position. In the unlocked position the first and second guide posts 108, 110 are slidable with respect to the housing 102. This means that the user can push down on the first and second handles 112, 114 and the first and second guide posts 108, 110 slide into or through the housing 102. In this way, the distance between the base portion 106 and the housing 102 can be adjusted. This means that the user can position the power tool 100 above the workpiece and then push the housing 102 towards the workpiece and the cutting tool plunges into the workpiece.

As discussed hereinafter, the power tool 100 is configured to be set in a plurality of unlocked positions for different operation modes of the power tool 100.

The user can select between the locked and unlocked position of the power tool 100 by using a locking system (not shown) mounted on the power tool 100. In some examples, the locking system is actuatable with a locking lever 134.

Figure 1 shows the locking lever 134 in a locked position. In some examples, the locking lever 134 is in the locked position in a vertical orientation. The locking lever 134 is mechanically coupled to the first and / or second guide posts 108, 110 such that relative movement of the first and second guide posts 108, 110 is prevented when the locking lever 134 is in the locked position.

In some examples, the locking lever 134 actuates a locking bolt (not shown) to engage the first guide post 108 or the second guide post 110. In this way, the locking bolt exerts a frictional force against the first or second guide posts 108, 110 when the locking lever 134 is in the locked position. Alternatively, the locking bolt can engage a detent or a hole in the first guide post 108 or the second guide post 110.

Accordingly, when the locking lever 134 is in the locked position the locking bolt clamps against or engages the first or second guide posts 108, 110 preventing relative movement therebetween. In some examples the locking lever 134 optionally engages a reciprocal hole or detent (not shown) in the second guide post 110 and the housing 102. In other examples, an additional second locking bolt (not shown) is used to also engage with the first guide post 108 such that both the first and the second guide posts 108, 110 are locked at the same time. In other examples, other mechanisms can be used to lock the first and second guide posts 108, 110 such as a latch-catch mechanism, a ball bearing engaging a detent in the first and second guide posts 108, 110 or any other suitable mechanism.

The locking lever 134 is moveable between the locked position shown in Figure 1 and an unlocked position (not shown). In some examples, the locking lever 134 is rotatable between the locked position and the unlocked position about a rotational axis of the locking lever 134. In some other examples, the locking lever 134 is slidable between the locked position and the first and second unlocked positions. Mechanical linkages (not shown) may be coupled between the locking lever 134 and the locking bolt for actuating engagement between the locking bolt and the first and second guide posts 108, 110.

When the user plunges the housing 102 towards the base portion 106, the collet 104 and the cutting tool project through the base aperture 126. A housing return spring 128 is optionally shown in Figure 2 as is fixed with respect to the first guide post 108 at a first spring end 140 and connected to the housing 102 at a second spring end 142. In some examples the housing return spring 128 is fixed with respect to the first guide post 108 at a first spring end 140 with a first C-clip (not shown) and fixed with respect to the housing 102 at a second spring end 142 with a second C-clip (not shown). Other types of fasteners can be used instead of the first and second c-clips. Accordingly, when the housing 102 is moved towards, the base portion 106, the housing return spring 128 extends and exerts a return force on the housing 102 to return the unplunged position (e.g., the power tool 100 as shown in Figure 1). The housing return spring 128 is shrouded with a bellows 144 to prevent ingress of dirt, debris, or moisture into the housing return spring 128 or other parts of the power tool 100.

In order to adjust the depth of the plunge e.g., how far the collet 104 projects through the base aperture 126, the housing 102 comprises a depth rod 152. The depth rod 152 is configured to engage one or more depth screws 154 of a plunge depth stop mounted on the base portion 106. When the housing 102 is plunged towards the base portion 106, the housing 102 is prevented from moving further towards the base portion 106 when the depth rod 152 engages the depth screws 154 of the plunge depth stop. The amount the depth rod 152 extends towards the base portion 106 is adjustable by the user. Furthermore, the amount the depth screws 154 project towards the housing 102 from the base portion 106 are also adjustable by the user. For the purposes of clarity only one of the depth screws 154 are labelled. The plunge depth stop, the depth screws 154 and the depth rod 152 are known and will not be described in any further detail.

Turning back to Figure 1, the power tool 100 comprises a dust extraction conduit 136. The dust extraction conduit 136 is connectable to a vacuum source such as a workshop vacuum. The first guide post 108 is hollow and comprises a first guide post conduit 138 which is in fluid communication with the dust extraction conduit 136 at a first end of the first guide post 108.

The second end of the first guide post 108 is in fluid communication with the base portion 106 and the cutting tool. In this way, the first guide post conduit 138 couples the vacuum source via the dust extraction conduit 136 to the base portion 106. This means cutting chips and other debris from the workpiece can be collected and extracted during operation.

The base portion 106 provides a stable and flat surface in a plane parallel with axis A-A (as shown in Figure 2). The base portion 106 is arranged to be positioned and secured against the workpiece during operation of the power tool 100. The base portion 106 may comprise a first base side 158 facing away from the workpiece, and a second base side 160 facing towards the workpiece. The base portion 106 may be formed from any suitable material such as metal, plastic, composite, or any combination thereof. The dimensions and geometrical features of the base portion 106 may be configured to ensure proper compatibility with a variety of accessories, as discussed below.

The base portion 106 may optionally comprise a plurality of mounting features, such as holes, slots, or recesses, which enable the secure attachment of other components such as a sub-base adapter 162. These mounting features may be arranged in a predetermined pattern or layout, which corresponds to complementary features on the sub-base adapter 162 for proper alignment and mounting.

The base portion 106 of the power tool 100 may be integrally formed with the housing 102 or may be a separate component that is securely attached or connected to the main body of the housing 102 as shown in the accompanying Figures. Figure 1 shows the first guide post 108 and the second guide post 110 fixed with respect to the base portion 106.

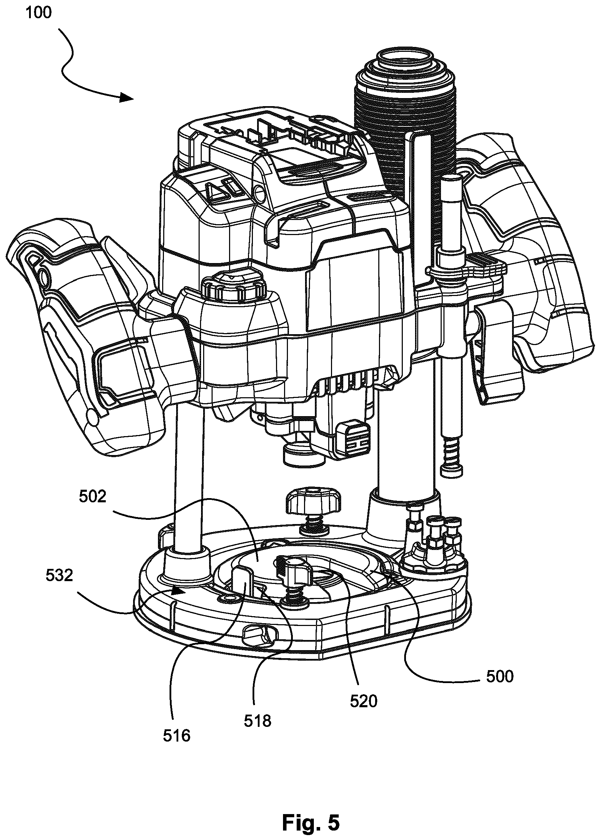

Figure 5 shows a perspective view of the power tool 100 with the dust cap accessory 500, showing the dust cap in greater detail according to an example. The dust cap accessory 500 includes a dust cap body 502, a base portion mounting mechanism 532, and a dust cap centre hole 520. The dust cap accessory 500 is configured to limit debris from the workpiece travelling through the base aperture 126. This ensures that the spread of the dust, debris and chips from the workpiece is limited and keeps the workpiece and workshop cleaner. This also aids extraction of the dust and debris via a vacuum source which improves the performance of the power tool 100.

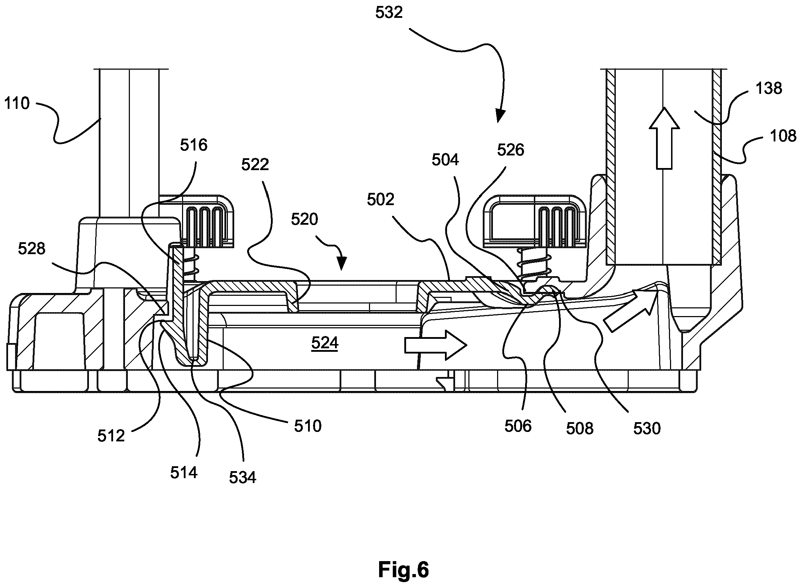

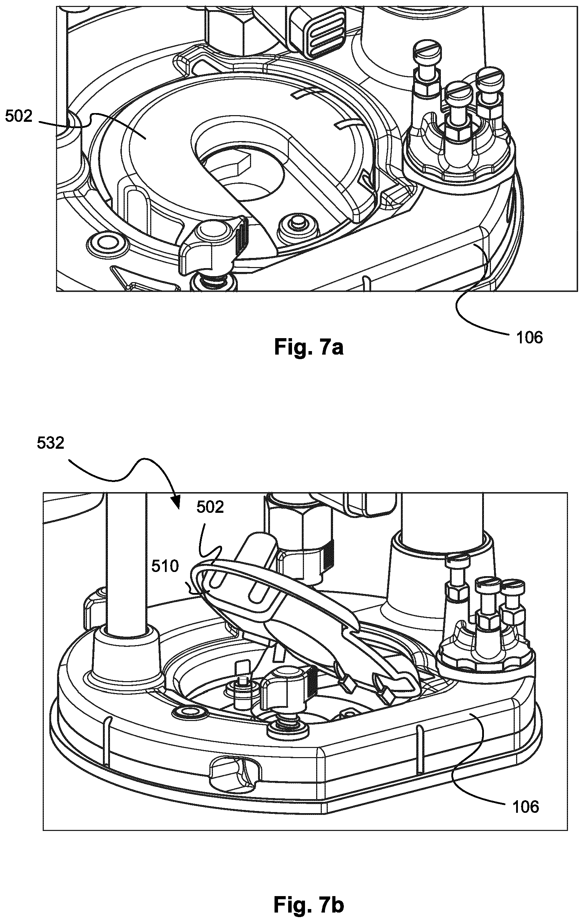

The dust cap accessory 500 will now be described in more detail with reference to Figure 5 and also Figures 6, 7a and 7b.

Figure 6 shows a partial close-up cross-sectional view of the power tool 100 with the dust cap accessory 500. Figure 7a shows a close-up perspective view of the power tool 100 with the dust cap accessory 500 in the locked position according to an example. Figure 7b is a close-up perspective view of the power tool 100 with the dust cap accessory 500 in the release position according to an example.

The user is able to mount the dust cap accessory 500 to the base portion 106 of the power tool 100. This means that the amount of dust and debris from the workpiece generated during operation is reduced. This can make operation of the power tool 100 easier. Furthermore, for the reasons as discussed below, this can also help more dust and debris be removed by the workshop vac when connected to the power tool 100.

In one example, the dust cap accessory 500 is designed to be removably mounted to the base portion 106 of a power tool 100, such as a plunge router. The dust cap accessory 500 comprises a dust cap body 502 and a base portion mounting mechanism 532 that allows for easy attachment and detachment of the dust cap accessory 500 to the base portion 106 of the power tool 100.

In some examples, the dust cap body 502 is configured to partially cover the base aperture 126 of the base portion 106 when the dust cap accessory 500 is mounted to the power tool 100. The base portion mounting mechanism 532 is designed to securely attach the dust cap accessory 500 to the base portion 106 while allowing for easy removal when necessary. By partially covering the base aperture 126, the dust cap accessory 500 provides a physical barrier and reduces the space for dust and debris to travel through the base aperture 126.

Furthermore, the dust cap accessory 500 can be moved from the locked position (as shown in Figure 7a) to the released position (as shown in Figure 7b) for the purposes of allowing the user to inspect the cutting tool or the workpiece before operation. This may be useful so that the user can clear a blockage in the base portion 106 e.g., jammed chips in the extraction chamber 524. In other words, the user can move the dust cap accessory 500 from the locked position to the release position and not need to completely remove the dust cap accessory 500 from the power tool 100.

In one example, the base portion mounting mechanism 532 comprises a dust cap release clip 510 that is configured for snap fit engagement with the base portion 106 of the power tool 100. The dust cap release clip 510 may include a projecting lip 512 that is designed to engage a shoulder portion 528 on a first base side 158 of the base portion 106. This snap fit engagement allows for a secure connection between the dust cap accessory 500 and the base portion 106 while also enabling easy removal of the dust cap accessory 500 when needed.

In some examples, the dust cap release clip 510 may comprise a spring element 534 configured to urge the projecting lip 512 towards the shoulder portion 528. In some examples, the spring element 534 is a living hinge which is integral with the dust cap body 502. This design allows for a more streamlined and efficient attachment process, as well as a more durable and long-lasting connection between the dust cap accessory 500 and the base portion 106.

Furthermore, the projecting lip 512 comprises a sloped surface 514 which is configured to cam against the shoulder portion 528 when the dust cap accessory 500 is pushed into the locked position (as shown in Figure 7a). As the shoulder portion 528 moves past the sloped surface 514, the projecting lip 512 snaps into engagement with the shoulder portion 528.

In one example, the dust cap accessory 500 may comprise a dust cap projecting arm 504 that is configured to pivotally mount the dust cap accessory 500 to the base portion 106 of the power tool 100. This pivotally mounted design allows for easy movement of the dust cap accessory 500 between locked and released positions when being mounted to or removed from the base portion 106. In some examples, the dust cap projecting arm 504 may include a pivot recess 506 that is designed to engage and pivot about a base aperture lip 526 of the base aperture 126 on the base portion 106.

The dust cap projecting arm 504 is optionally positioned on an opposite side of the dust cap accessory 500 to the dust cap release clip 510.

In one example, the dust cap projecting arm 504 may also comprise a projecting arm clip 508 that is configured to engage a cap engagement recess 530 on the base portion 106. This engagement further secures the dust cap accessory 500 to the base portion 106 and allows the dust cap accessory 500 to pivot into the locked position when mounted to the base portion 106.

One example of the base portion mounting mechanism 532 has been described with reference to the Figures. However, any other suitable base portion mounting mechanism 532 can be used. For example, the base portion mounting mechanism 532 can comprise a bayonet fitting or screw fitting whereby the dust cap accessory 500 locks into place on the base portion 106 with a rotational mounting action. Alternatively, the dust cap accessory 500 can slide into engagement with the base portion 106 with a slot and rail arrangement (e.g. slots provided on the sides of the dust cap accessory 500 and rails provided on the base portion 106 or vice versa.). Alternatively, the dust cap accessory 500 can be mounted on the base portion 106 with any other suitable mechanism e.g., clips, clamps etc.

In one example, the dust cap accessory 500 includes a dust cap centre hole 520. The dust cap centre hole 520 is configured to receive a cutting tool when the cutting tool is plunged into a workpiece. This configuration allows the cutting tool to pass through the dust cap centre hole 520 while the dust cap accessory 500 remains mounted to the base portion 106 of the power tool 100. Accordingly, when the cutting tool is plunged, the cutting tool substantially fills the dust cap centre hole 520. This further prevents dust and debris from passing through the base aperture 126 e.g., towards the housing 102.

Furthermore, the dust cap centre hole 520 comprises a centre hole lip 522. The centre hole lip 522 is designed to project downwards towards the base portion 106 of the power tool 100. The centre hole lip 522 provides a physical barrier and further prevents dust and debris from passing through the base aperture 126 e.g., towards the housing 102.

The dust cap centre hole 520 is sized and shaped to accommodate the cutting tool, ensuring a secure fit and minimising the gap between the cutting tool and the dust cap centre hole 520. This minimises the amount of debris and dust that can escape through the gap and travel through the base aperture 126 during the cutting process.

The dust cap centre hole 520 may also be configured to accommodate different sizes and types of cutting tools, providing versatility and adaptability for various cutting applications. This can be achieved by providing a range of dust cap accessories 500 with different sized dust cap centre holes 520 or by providing an adjustable dust cap centre hole 520 that can be resized to fit the cutting tool being used.

In some examples, the dust cap accessory 500 is designed for tool-free mounting and adjustment, allowing for easy and efficient installation, removal, and adjustment of the dust cap accessory 500 on the power tool 100 without the need for additional tools or equipment. This feature provides users with a convenient and time-saving solution for managing debris and dust during cutting operations.

In one example, the dust cap accessory 500 is configured to be easily engaged and disengaged from the base portion 106 of the power tool 100 without the use of tools. The base portion mounting mechanism 532 may comprise a dust cap release clip 510 that is configured for snap fit engagement with the base portion 106. The snap fit engagement allows for quick and easy attachment and detachment of the dust cap accessory 500 from the power tool 100, providing users with a convenient method for managing debris during cutting operations.

As mentioned above, in some examples, the dust cap release clip 510 may comprise a projecting lip 512 that is configured to engage a shoulder portion 528 on a first base side 158 of the base portion 106. In order to allow easier mounting and tool-free removal of the dust cap accessory 500, the dust cap accessory 500 comprises a release lever 516 for disengaging the projecting lip 512 and the shoulder portion 528.

Indeed, the release lever 516 is configured to release the projecting lip 512 from the shoulder portion 528 when depressed. By depressing the release lever 516, the user can easily disengage the dust cap accessory 500 from the base portion 106 without the need for additional tools or equipment. This feature provides users with a convenient and efficient method for removing the dust cap accessory 500 from the power tool 100 when necessary, such as for cleaning or maintenance purposes.

In some examples, the release lever 516 may be positioned within a release lever recess 518 in the dust cap body 502, allowing for constrained movement of the release lever 516 during disengagement. The release lever recess 518 may be configured to allow the release lever 516 to move freely, enabling the user to easily depress the release lever 516 and disengage the projecting lip 512 from the shoulder portion 528. At the same time, the release lever recess 518 prevents the user from overstressing the spring element 534 and reducing the likelihood of the release lever 516 snapping off. The spring element 534 biases the release lever 516 and the projecting lip 512 such that the projecting lip 512 is in engagement with the shoulder portion 528.

The interaction between the release lever 516, the projecting lip 512, and the shoulder portion 528 provides a secure and reliable connection between the dust cap accessory 500 and the base portion 106 during use, while also allowing for easy disengagement when necessary.

In one example, the base portion 106 of the power tool 100 comprises an extraction chamber 524 that is in fluid communication with a vacuum source e.g., a workshop vac. The extraction chamber 524 is designed to facilitate the efficient removal of debris, chips, and dust generated during the cutting process. The dust cap accessory 500 plays a role in the formation and functioning of the extraction chamber 524 when it is mounted to the base portion 106.

In some examples, the dust cap accessory 500 is configured to partly form the extraction chamber 524 when it is mounted to the base portion 106. In this way, the dust cap body 502 partially covers the base aperture 126 and defines one of the walls of the extraction chamber 524. The extraction chamber 524 is an internal volume of the base portion 106 which can accommodate dust, debris, and chips from the workpiece before being extracted by the airflow generated by the vacuum source.

Since the dust cap accessory 500 partially covers the base aperture 126, the vacuum source is better configured to entrain debris in the extraction chamber 524 in the airflow. In this way, the dust cap accessory 500 provides a better airflow through the base portion 106. The arrangement as shown in the Figures does not provide a seal, but helps the debris, chips, and dust generated during the cutting process to be entrained in the airflow.

In some examples, the extraction chamber 524 is in fluid communication with the first guide post conduit 138 of the power tool 100. The first guide post conduit 138 is integrated with the first guide post 108 and is in fluid communication with a vacuum source via a dust extraction conduit 136 as discussed above. This configuration allows for improved airflow within the extraction chamber 524 and the first guide post conduit 138, resulting in more efficient removal of chips, dirt, and debris by the vacuum source.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealised or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A dust cap accessory (500) for a power tool (100) having a base portion (106) with a base aperture (126), the dust cap accessory (500) comprising:
a dust cap body (502) configured to partially cover the base aperture (126);
a base portion mounting mechanism (532) for removably mounting the dust cap accessory (500) to the base portion (106); and
a dust cap centre hole (520) configured to receive a cutting tool when the cutting tool is plunged into a workpiece,
wherein the dust cap accessory (500) is configured to limit debris from the workpiece travelling through the base aperture (126).

2. The dust cap accessory (500) according to claim 1, wherein the base portion mounting mechanism (532) comprises a dust cap release clip (510) configured for snap fit engagement with the base portion (106).

3. The dust cap accessory (500) according to claim 2, wherein the dust cap release clip (510) comprises a projecting lip (512) configured to engage a shoulder portion (528) on a first base side (158) of the base portion (106).

4. The dust cap accessory (500) according to claim 3, further comprising a release lever (516) configured to release the projecting lip (512) from the shoulder portion (528) when depressed, allowing the dust cap accessory (500) to be released from the base portion (106).

5. The dust cap accessory (500) according to any one of claims 2 to 4, wherein the dust cap release clip (510) comprises a living hinge and is integral with the dust cap body (502).

6. The dust cap accessory (500) according to any one of claims 1 to 5, further comprising a dust cap projecting arm (504) configured to pivotally mount the dust cap accessory (500) to the base portion (106).

7. The dust cap accessory (500) according to claim 6, wherein the dust cap projecting arm (504) comprises a pivot recess (506) configured to engage and pivot about a base aperture lip (526) on the base portion (106).

8. The dust cap accessory (500) according to claim 6 or 7, wherein the dust cap projecting arm (504) comprises a projecting arm clip (508) configured to engage a cap engagement recess (530) on the base portion (106).

9. The dust cap accessory (500) according to any one of claims 1 to 8, wherein the dust cap centre hole (520) comprises a centre hole lip (522) configured to project downwards towards the base portion (106).

10. The dust cap accessory (500) according to any one of claims 1 to 9, wherein the dust cap accessory (500) is configured for tool-free mounting and adjustment.

11. The dust cap accessory (500) according to any one of claims 1 to 10, wherein the base portion (106) comprises an extraction chamber (524) in fluid communication with a vacuum source and the dust cap accessory (500) is configured to partly form the extraction chamber (524) when the dust cap accessory (500) is mounted to the base portion (106).

12. A power tool (100) comprising:
a housing (102);
a base portion (106) having a base aperture (126);
a cutting tool; and
a dust cap accessory (500) according to any one of claims 1 to 11,
wherein the dust cap accessory (500) is removably mounted to the base portion (106) and configured to limit debris from a workpiece travelling through the base aperture (126) when the cutting tool is plunged into the workpiece.

13. The power tool (100) according to claim 12, wherein the base portion (106) comprises a first guide post (108) having a first guide post conduit (138) in fluid communication with a vacuum source via a dust extraction conduit (136).

14. The power tool (100) according to claim 13, wherein the extraction chamber (524) is in fluid communication with the first guide post conduit (138).

15. The power tool (100) according to any one of claims 12 to 14, wherein the power tool (100) is a plunge router.
